# EUROPEAN PATENT SPECIFICATION

(11) **EP 2 335 868 B1**
(45) Date of publication and mention of the grant of the patent: **17.02.2016**
(21) Application number: 10193935.3
(22) Date of filing: 07.12.2010
(51) Int. Cl.: B23Q 11/00, A47L 9/24, F16J 15/02, A47L 7/00, A47L 9/02

(54) **Dust extractor for drilling machine**
Staubabsaugvorrichtung für Bohrmaschine
Extracteur de copeaux pour perceuse

(30) Priority: 15.12.2009 GB 0921855
(43) Date of publication of application: 22.06.2011
(73) Proprietor: Black & Decker Inc., Newark, Delaware 19711 (US)
(72) Inventor: Hahn, Norbert, 65510 Hunstetten-Limbach (DE)
(74) Representative: Bell, Ian Stephen

(56) References cited:
- EP-A1- 1 894 653
- DE-A1- 19 543 599
- DE-U1-202008 008 561
- GB-A- 2 005 403
- US-A- 2 245 151

## Description

The present invention relates to a suction cup dust extractor for a drill.

US4205728, GB2005403, EP1894653 and DE202008008561 disclose a suction cup dust extractor for a drill. The present invention aims to provide an improvement in the design over the one disclosed in EP 1894653, which forms the basis for the preamble of claim 1.

Accordingly, there is provided a suction cup dust extractor in accordance with claim 1.

An embodiment of the invention will now be described with reference to enclosed drawings of which:

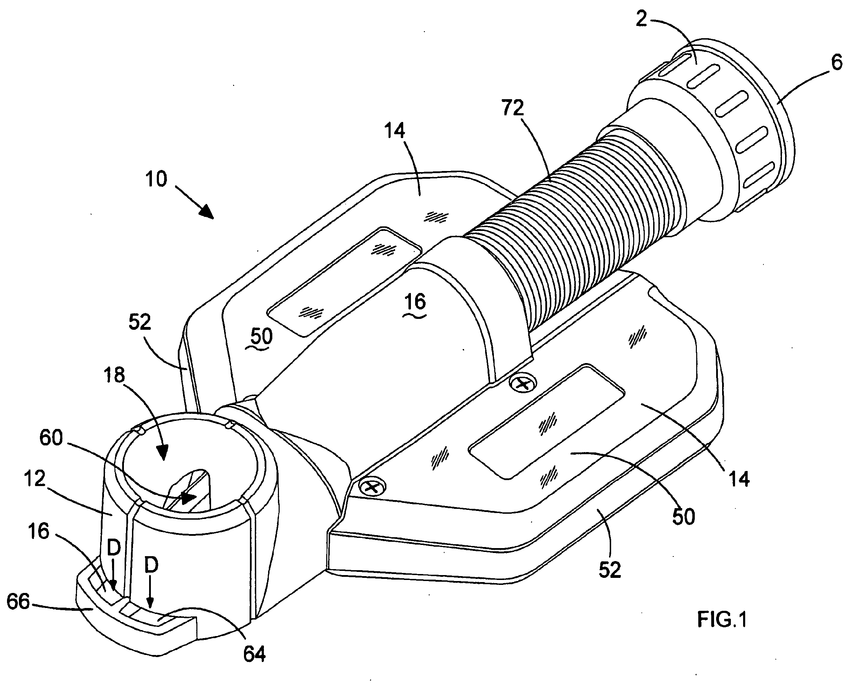

Figure 1 shows a perspective view of the top of the suction cup dust extractor;

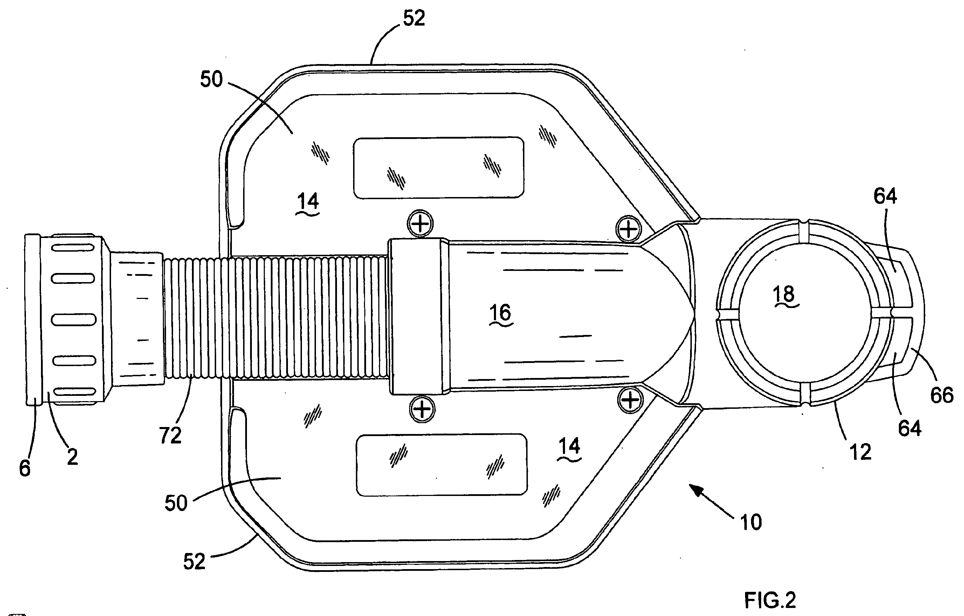

Figure 2 shows a top view of the suction cup dust extractor;

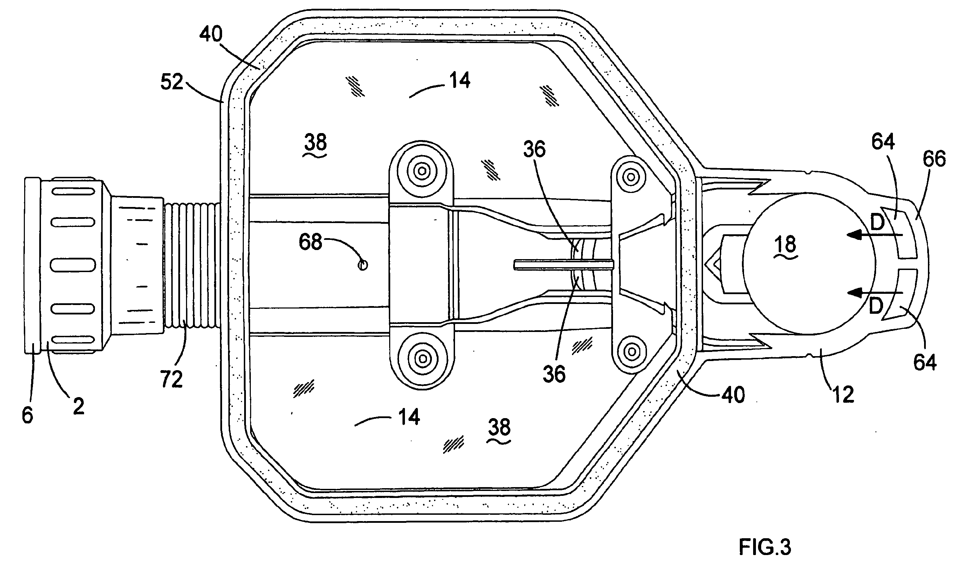

Figure 3 shows a bottom view of the suction cup dust extractor;

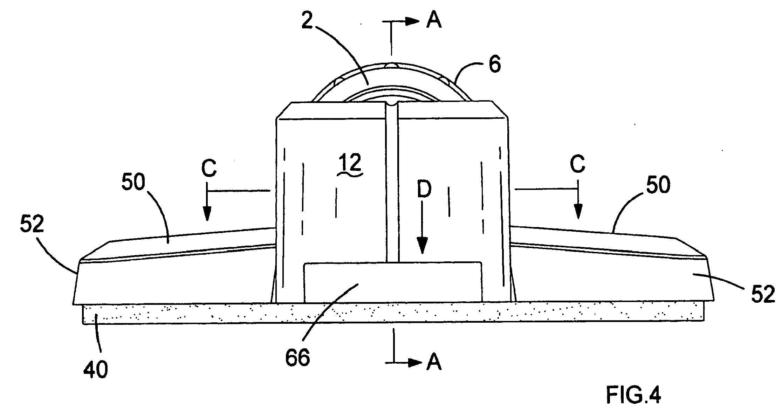

Figure 4 shows a front view of the suction cup dust extractor;
Figure 5 shows a vertical cross sectional view of the suction cup dust extractor in the direction of Arrows A in Figure 4;

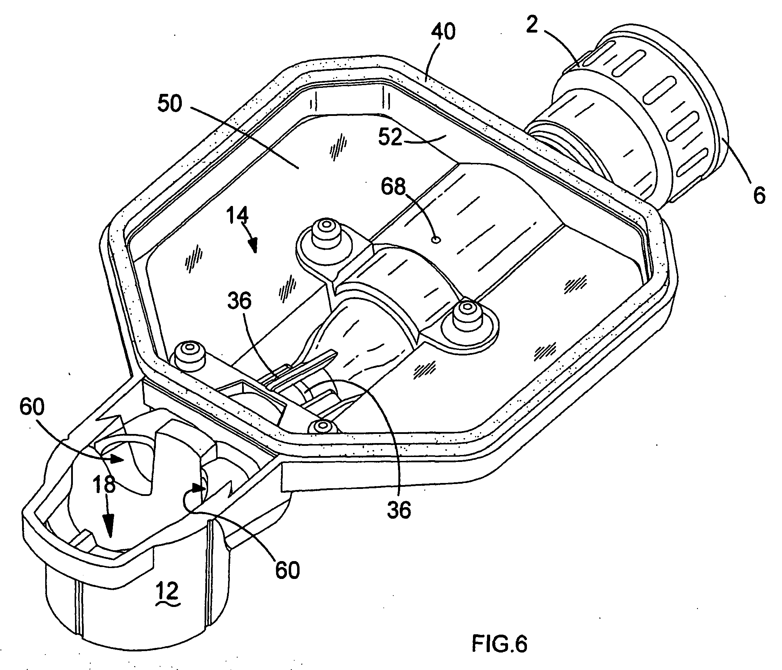

Figure 6 shows a perspective view of the underside of the suction cup dust extractor; and

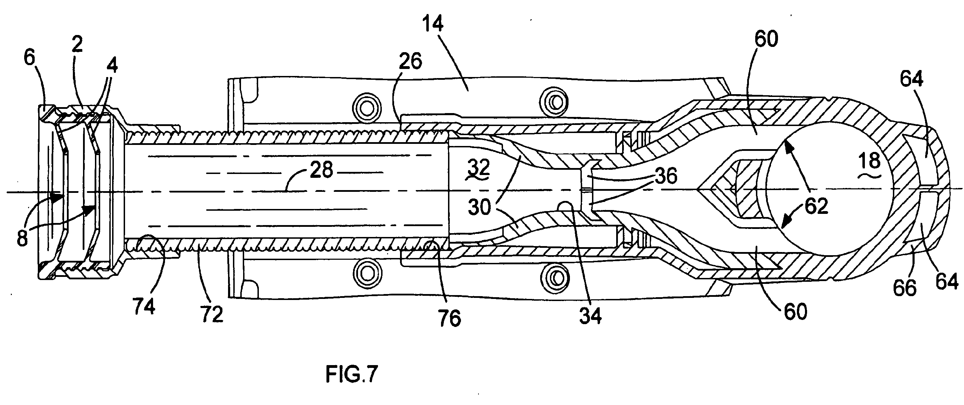

Figure 7 shows a horizontal cross sectional view of the suction cup dust extractor in the direction of Arrows C in Figure 4.

Referring to the enclosed drawings, the suction cup dust extractor comprises a housing 10 and a drill collar 12 rigidly connected to it at the top end of the housing 10. The housing 10 comprises a skirt 14 with a bridge 16 formed on top of the skirt 14. The bridge 16 extends from the middle of the skirt 16 to the top end of the skirt 16 where it is attached to the side of the drill collar 12. The skirt 14 has a top wall 50 and side walls 52 which form a large recess 38, on the opposite side of the skirt 14 to that on which the bridge 16 is attached, which has an opening which faces away from the bridge 16.

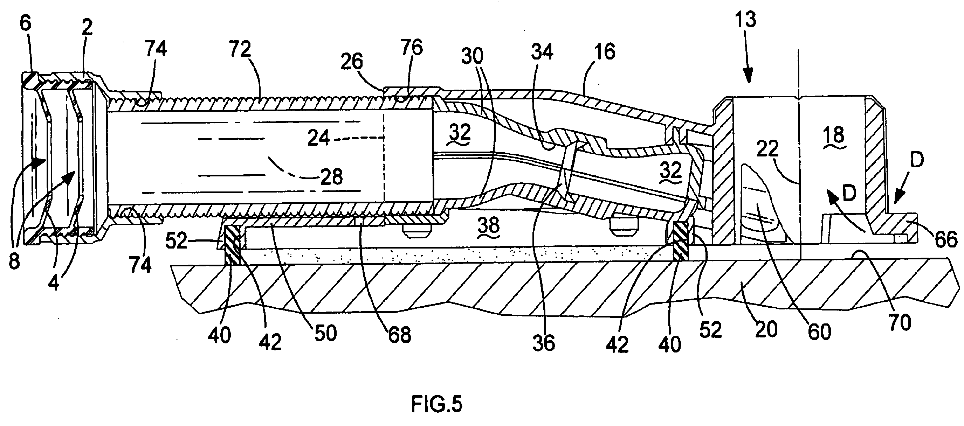

The drill collar 12 forms a drill passage 18 which enables a cutting tool, such as a drill bit (not shown), to pass through it (direction of Arrow B in Figure 5) to engage a work piece 20. The drill collar 12 has a longitudinal axis 22. Both the drill passage 18 and the opening of the recess 38 are orientated in the same direction.

Formed in end 26 of the bridge 16 in the middle of the skirt 14 is an aperture 24 which provides an air exit. The aperture 24 has a longitudinal axis 28 which is perpendicular to and intersects with the longitudinal axis 22 of the drill collar 12.

Formed by internal walls 30 of the housing 10 is a first passage 32 which extends from the aperture 24 towards the drill passage 18 of the drill collar 12. Formed within the first passage 32 is a throat 34 where the diameter of the passage 32 is reduced. Two apertures 36 are formed through the wall of the passage 32 at the narrowest point of the throat 34. The apertures 36 provide a passageway from the passage 32 to the recess 38 formed by the skirt 14.

The passage 32 splits into two passages 60 between the throat 34 and the drill passage18, each connecting with the drill passage 18 through a separate aperture 62.

An inlet air passage 64 is formed in by a frame 66 attached to the base of the drill collar 12 and operates in the same manner as that described in EP1457288. Air can pass through the inlet air passage into the drill collar 12 as shown by Arrow D.

A seal 40 locates in a groove 42 formed around the periphery of the wall of the skirt 20 on the underside of the skirt 14. When the suction cup dust extractor is placed against a work piece 20 it engages with the seal 40, the work piece 20 sealing the opening to the recess 38 to form a chamber.

An air hole 68 is provided in the wall 50 of the skirt 20 to provide an air passage between the recess and the surrounding atmosphere. During the use of the suction cup dust extractor, the hole 68 ensures that there is a constant air flow in the recess formed under the skirt 20 if the seal provides a perfect air seal with the work piece 20.

The suction cup extractor further comprises a tubular connection collar 2 which connects to a vacuum source (not shown). A rubber seal 4 is fastened inside of the connection collar 2 and which comprises two rubber rings 4 which extend radially inwards from the drill collar 12 with an aperture 8 formed through them. The rings 4 are capable of gripping onto the nozzle (not shown) of a hose (not shown) of the vacuum source. As the rings 4 are resilient, they can stretch radially outwardly, increasing the size of the apertures 8, enabling nozzles of different sizes to be used. The rings 4 would then grip the nozzle due to their resilience and frictionally hold the nozzle.

The connection collar 2 connects to the aperture 24 via a flexible tube 72. One end of the flexible tube 72 is held in a sleeve 74 formed in the connection collar 2, the other in a sleeve 76 formed in the bridge 16. The flexible tube 72 can be stretched to extend its length and move the collar 2 away from the housing 10 or be bent or twisted to allow the connection collar 2 to be moved to a range of positions relative to the aperture 24. The flexible tube 72 is made from rubber.

In use, the suction cup dust extractor is placed against a surface 70 of the work piece 20 so that the seal 40 makes contact with it. A chamber is formed when opening of the recess 38, formed by the walls 50, 52, of the skirt 14 is sealed by the surface 70of the work piece 20. The suction device is activated and air is sucked through the connection collar 2, through the flexible tube 72, through the aperture 24, through the first passage 32, through the pair of separate passages 60, through the apertures 62 and then from the drill passage 18. As air passes through the throat 34 of the first passage 32, it speeds up, causing a reduced pressure inside of the two apertures 36 due to a venturi effect. This results in the air in the recess 38 to be sucked out through the apertures 36 and into the passage 32. This causes the skirt 14 and hence the dust extractor, to be attached to the surface 70 due to the suction. The hole 68 ensures that there is a constant flow of air from the hole 68, through the recess 38, and then through the two apertures 36. The operator can then drill a hole in the surface by passing the drill bit through the drill collar 12 and drilling into the surface 70. Any debris generated during the drilling process will be sucked up into the drill passage 18 and then into passages 60. The use of two passages provides better debris clearance. The debris is then transported through the passage 32, through the aperture 24, through the flexible tube 72 and then through the connection collar 2. The hole 68 ensures that there is always air passing through the two aperture into the passage 32, thus ensuring no debris passes into the apertures 36 or the recess 38.

## Claims

1. A suction cup dust extractor for a drill comprising:
a housing (10);
a drill collar (12) attached to the housing (10), having a drill passage (18) formed through it;
a recess (38) formed by the walls (50, 52) of the housing (10) having an opening which, in use, locates against a work piece to create a chamber;
an aperture (24) located on the housing (10) which provides an air exit;
at least one first air passage (32) formed within the housing (10) which connects between the aperture (24) and the drill passage (18) and which enables air to pass from the drill passage (18) to the aperture (24);
at least one second air passage (36) formed within the housing (10) which connects between the recess (38) and the at least one first air passage (32) and which enables air to pass from the recess (38) to the aperture (24);
wherein there is further provided a connection collar (2) which is connected to the aperture via a flexible tube (72) only; and
wherein the aperture (24) has a longitudinal axis (28) and the drill collar (12) has a longitudinal axis (22), the longitudinal axis (28) of the aperture (24) being orientated substantially perpendicularly to the longitudinal axis (22) of the drill collar (12);
**characterised in that** the at least one second air passage (36) connects between the recess (38) and the at least one first air passage inside the housing (10);
wherein the at least one first air passage (32) between the drill passage (18) and aperture (24) is substantially linear;
wherein the at least one second air passage (36) extends substantially perpendicularly to the at least one first air passage (32); and
wherein the at least one first passage comprises a throat (34), the at least one second passage (36) connects with the at least one first passage (32) at the throat.

2. A suction cup dust extractor as claimed in claim 1 wherein the length of the flexible tube (72) is capable of being stretched, enabling the connection collar (2) to be moved away from the aperture (24).

3. A suction cup dust extractor as claimed in any one of the previous claims wherein the longitudinal axis (28) of the aperture (24) intersects with the longitudinal axis (22) of the drill collar (12).

4. A suction cup dust extractor as claimed in any one of the previous claims wherein there is provided at least one resilient seal 6 located within the connection collar (2).

5. A suction cup dust extractor as claimed in claim 4 wherein the seal comprises at least one resilient ring (4) which extends radially inwardly from the connection collar (2) and has a resilient ring aperture (8) formed through it.

6. A suction cup dust extractor as claimed in any one of the previous claims wherein a first end of the flexible tube (72) locates inside of a sleeve (74) formed in the connection collar (2).

7. A suction cup dust extractor as claimed in any one of the previous claims wherein a second end of the flexible tube (72) locates inside of a sleeve (76) formed in the housing (10).

8. A suction cup dust extractor as claimed in any one of the previous claims wherein the at least one first passage (32) comprises, at one end, a single passage which connects to the aperture (24) and at the other end, a pair of passages (60), which each connect to the drill passage (18).

9. A suction cup dust extractor as claimed in any one of the previous claims wherein there is provided at least one hole (68) in the walls (50, 52) of the housing (10) to provide an air passage between the recess (38) and the surrounding atmosphere.

## Patentansprüche

1. Saugnapf-Staubabsauger für einen Bohrer, umfassend:
ein Gehäuse (10);
einen Bohrerbund (12), der am Gehäuse (10) angebracht ist, mit einem Bohrerdurchgang (18), der dort hindurch ausgebildet ist;
eine Aussparung (38), die durch die Wände (50, 52) des Gehäuses (10) ausgebildet ist, mit einer Öffnung, die im Gebrauch an einem Werkstück zum Schaffen einer Kammer anliegt;
eine Öffnung (24), die sich am Gehäuse (10) befindet und einen Luftaustritt vorsieht;
zumindest einen ersten Luftkanal (32), der innerhalb des Gehäuses (10) ausgebildet ist, zwischen der Öffnung (24) und dem Bohrerdurchgang (18) verbindet und ermöglicht, dass Luft vom Bohrerdurchgang (18) zur Öffnung (24) durchtritt;
zumindest einen zweiten Luftkanal (36), der innerhalb des Gehäuses (10) ausgebildet ist, zwischen der Aussparung (38) und dem zumindest einen ersten Luftkanal (32) verbindet und ermöglicht, dass Luft von der Aussparung (38) zur Öffnung (24) durchtritt;
wobei ferner ein Verbindungsbund (2) vorgesehen ist, der nur über ein flexibles Rohr (72) mit der Öffnung verbunden ist; und
wobei die Öffnung (24) eine Längsachse (28) aufweist und der Bohrerbund (12) eine Längsachse (22) aufweist, wobei die Längsachse (28) der Öffnung (24) im Wesentlichen senkrecht zur Längsachse (22) des Bohrerbunds (12) ausgerichtet ist;
**dadurch gekennzeichnet, dass** der zumindest eine zweite Luftkanal (36) zwischen der Aussparung (38) und dem zumindest einen ersten Luftkanal innerhalb des Gehäuses (10) verbindet;
wobei der zumindest eine erste Luftkanal (32) zwischen dem Bohrerdurchgang (18) und der Öffnung (24) im Wesentlichen linear ist;
wobei der zumindest eine zweite Luftkanal (36) im Wesentlichen senkrecht zum zumindest einen ersten Luftkanal (32) verläuft; und
wobei der zumindest eine erste Luftkanal einen Hals (34) umfasst, wobei sich der zumindest eine zweite Luftkanal (36) am Hals mit dem zumindest einen ersten Luftkanal (32) verbindet.

2. Saugnapf-Staubabsauger nach Anspruch 1, wobei die Länge des flexiblen Rohrs (72) gedehnt werden kann, wodurch ermöglicht ist, dass der Verbindungsbund (2) von der Öffnung (24) weg bewegt werden kann.

3. Saugnapf-Staubabsauger nach einem der vorhergehenden Ansprüche, wobei die Längsachse (28) der Öffnung (24) die Längsachse (22) des Bohrerbunds (12) schneidet.

4. Saugnapf-Staubabsauger nach einem der vorhergehenden Ansprüche, wobei zumindest eine elastische Dichtung (6) vorgesehen ist, die sich innerhalb des Verbindungsbunds (2) befindet.

5. Saugnapf-Staubabsauger nach Anspruch 4, wobei die Dichtung zumindest einen elastischen Ring (4) umfasst, der vom Verbindungsbund (2) radial nach innen vorsteht und eine elastische Ringöffnung (8) aufweist, die dort hindurch ausgebildet ist.

6. Saugnapf-Staubabsauger nach einem der vorhergehenden Ansprüche, wobei sich ein erstes Ende des flexiblen Rohres (72) innerhalb einer Hülse (74) befindet, die im Verbindungsbund (2) ausgebildet ist.

7. Saugnapf-Staubabsauger nach einem der vorhergehenden Ansprüche, wobei sich ein zweites Ende des flexiblen Rohrs (72) innerhalb einer Hülse (76) befindet, die im Gehäuse (10) ausgebildet ist.

8. Saugnapf-Staubabsauger nach einem der vorhergehenden Ansprüche, wobei der zumindest eine erste Kanal (32) an einem Ende einen einzelnen Kanal, welcher zur Öffnung (24) verbindet, und am anderen Ende ein Paar Kanäle (60) umfasst, welche jeder zum Bohrerdurchgang (18) verbinden.

9. Saugnapf-Staubabsauger nach einem der vorhergehenden Ansprüche, wobei zumindest ein Loch (68) in den Wänden (50, 52) des Gehäuses (10) zum Vorsehen eines Luftkanals zwischen der Aussparung (38) und der Umgebungsatmosphäre vorgesehen ist.

## Revendications

1. Extracteur de poussière à ventouse pour une perceuse, comprenant :
un logement (10) ;
un collier de perceuse (12) fixé au logement (10), ayant un passage de perceuse (18) formé à travers lui ;
un évidement (38) formé par les parois (50, 52) du logement (10) ayant un orifice qui, durant l'utilisation, se positionne contre une pièce à travailler pour créer une chambre ;
une ouverture (24) située sur le logement (10) qui fournit une sortie d'air ;
au moins un premier passage d'air (32) formé à l'intérieur du logement (10) qui se raccorde entre l'ouverture (24) et le passage de perceuse (18) et qui permet à de l'air de passer du passage de perceuse (18) à l'ouverture (24) ;
au moins un second passage d'air (36) formé à l'intérieur du logement (10) qui se raccorde entre l'évidement (38) et l'au moins un premier passage d'air (32) et qui permet à de l'air de passer de l'évidement (38) à l'ouverture (24) ;
dans lequel il est en outre prévu un collier de raccordement (2) qui est raccordé à l'ouverture par l'intermédiaire d'un tube flexible (72) seulement ; et
dans lequel l'ouverture (24) a un axe longitudinal (28) et le collier de perceuse (12) a un axe longitudinal (22), l'axe longitudinal (28) de l'ouverture (24) étant orienté de façon sensiblement perpendiculaire à l'axe longitudinal (22) du collier de perceuse (12) ;
**caractérisé en ce que** l'au moins un second passage d'air (36) se raccorde entre l'évidement (38) et l'au moins un premier passage d'air à l'intérieur du logement (10) ;
dans lequel l'au moins un premier passage d'air (32) entre le passage de perceuse (18) et l'ouverture (24) est sensiblement linéaire ;
dans lequel l'au moins un second passage d'air (36) s'étend de façon sensiblement perpendiculaire à l'au moins un premier passage d'air (32) ; et
dans lequel l'au moins un premier passage comprend une gorge (34), l'au moins un second passage (36) se raccorde à l'au moins un premier passage (32) au niveau de la gorge.

2. Extracteur de poussière à ventouse selon la revendication 1, dans lequel la longueur du tube flexible (72) est capable d'être étirée, permettant au collier de raccordement (2) d'être éloigné de l'ouverture (24).

3. Extracteur de poussière à ventouse selon une quelconque des revendications précédentes, dans lequel l'axe longitudinal (28) de l'ouverture (24) croise l'axe longitudinal (22) du collier de perceuse (12).

4. Extracteur de poussière à ventouse selon une quelconque des revendications précédentes, dans lequel il est prévu au moins un joint d'étanchéité résilient (6) situé à l'intérieur du collier de raccordement (2).

5. Extracteur de poussière à ventouse selon la revendication 4, dans lequel le joint d'étanchéité comprend au moins une bague résiliente (4) qui s'étend radialement vers l'intérieur à partir du collier de raccordement (2) et a une ouverture de bague résiliente (8) formée à travers elle.

6. Extracteur de poussière à ventouse selon une quelconque des revendications précédentes, dans lequel une première extrémité du tube flexible (72) se situe à l'intérieur d'un manchon (74) formé dans le collier de raccordement (2).

7. Extracteur de poussière à ventouse selon une quelconque des revendications précédentes, dans lequel une seconde extrémité du tube flexible (72) se situe à l'intérieur d'un manchon (76) formé dans le logement (10).

8. Extracteur de poussière à ventouse selon une quelconque des revendications précédentes, dans lequel l'au moins un premier passage (32) comprend, à une extrémité, un seul passage qui se raccorde à l'ouverture (24) et, à l'autre extrémité, une paire de passages (60), qui se raccordent chacun au passage de perceuse (18).

9. Extracteur de poussière à ventouse selon une quelconque des revendications précédentes, dans lequel il est prévu au moins un trou (68) dans les parois (50, 52) du logement (10) pour fournir un passage d'air entre l'évidement (38) et l'atmosphère environnante.
